Europäisches Patentamt

(19) European Patent Office

Office européen des brevets

(11) Veröffentlichungsnummer: **0 106 268**
**B1**

(12) **EUROPÄISCHE PATENTSCHRIFT**

(45) Veröffentlichungstag der Patentschrift:
**14.05.86**

(21) Anmeldenummer: **83109928.8**

(22) Anmeldetag: **05.10.83**

(51) Int. Cl.⁴: **B 09 B 5/00**

(54) **Vorrichtung zum Verdichten von aus Verpackungsmaterial und leicht pressbaren Abfällen bestehendem Müll.**

(30) Priorität: **15.10.82 DE 3238261**
    **19.07.83 DE 3326007**

(43) Veröffentlichungstag der Anmeldung:
    **25.04.84 Patentblatt 84/17**

(45) Bekanntmachung des Hinweises auf die Patenterteilung:
    **14.05.86 Patentblatt 86/20**

(84) Benannte Vertragsstaaten:
    **AT BE CH FR GB IT LI LU NL SE**

(56) Entgegenhaltungen:
    **AT - B - 272 964**
    **AT - B - 368 471**
    **DE - A - 2 655 314**
    **US - A - 3 462 199**

(73) Patentinhaber: **Bergmann, Heinz, Im Ründerdiek 1,**
    **D-4474 Lathen (DE)**

(72) Erfinder: **Bergmann, Heinz, Im Ründerdiek 1,**
    **D-4474 Lathen (DE)**

(74) Vertreter: **Wehser, Wulf, Dipl.-Ing. et al, Patentanwälte**
    **Wehser & Fleuchaus Roscherstrasse 12,**
    **D-3000 Hannover 1 (DE)**

**Beschreibung**

Die Erfindung betrifft eine Vorrichtung zum Verdichten von aus Verpackungsmaterial und leicht pressbaren Abfällen bestehendem Müll, wie Kartonagen, leichte Kunststoff- und Holzverpackungen, Papier, Abfälle von Zuschnitten sowie Holz-, Kunststoff- und Metallspäne, bestehend aus einem nach oben offenen Müllbehälter, einer in den Behälter eingreifenden und auf dem Müll kreisförmig umlaufenden, von einem den Behälter übergreifenden Ständer getragenen Verdichtungswalze, die während des Verdichtungsvorganges mit steigender Füllmenge des Behälters eine senkrechte Relativbewegung gegenüber dem Behälter durchführen kann.

Bei einer bekannten Anordnung dieser Art (DE-OS 2 655 314) ist die Verdichtungswalze am unteren Ende einer Zufuhrschnecke angeordnet und verdichtet den über die Zufuhrschnecke zugeführten Müll, wobei die Relativbewegung zwischen der Walze und dem Müll in dem Behälter dadurch herbeigeführt wird, dass der Behälter oder der Boden des Behälters während des Verdichtungsvorganges angehoben wird.

Nachteilig bei dieser Anordnung ist es, dass durch die von unten gegen die Walze aufgebrachte Hubbewegung des Mülls nur relativ geringe Mengen von Müll hinreichend verdichtet werden können, wenn nicht die Hubkräfte ein solches Mass erreichen sollen, dass die Vorrichtung einen unwirtschaftlichen Aufbau bekommt. Ein weiterer Nachteil der bekannten Anordnung besteht darin, dass diese aufgrund einer sich gemeinsam drehenden aus Walze und Schnecke bestehende Förderwerkzeugkombination relativ aufwendig, teuer und störanfällig ist. Für sperrigen Müll, der insbesondere in Form von Verpackungsmaterial anfällt, ist darüber hinaus die bekannte Vorrichtung völlig ungeeignet, da Material dieser Art in unzerkleinertem Zustand von der Schnecke nicht erfassbar ist.

Der Erfindung liegt demgemäss die Aufgabe zugrunde, eine Anordnung der eingangs genannten Art so auszubilden, dass diese mit relativ wenig Bauteilen auskommt, einfach und störunanfällig aufgebaut und zur Aufnahme sperrigen Mülls geeignet ist.

Diese Aufgabe wird erfindungsgemäss dadurch gelöst, dass an einem den Müllbehälter übergreifenden Arm des Ständers eine senkrecht sich erstreckende Welle angeordnet ist, an deren unterem Ende wenigstens ein sich horizontal erstreckender und um die Welle drehbarer Träger vorgesehen ist, auf welchem die Walze drehbar gelagert ist, wobei die Walze aufgrund ihres Eigengewichtes auf dem Müll aufliegt und der Arm in Verbindung mit einer ständerseitigen Hubvorrichtung steht, welche einen Hub der Walze aufgrund ihres Eigengewichtes zulässt und wobei die Walze einem kontinuierlich wechselnden Vor- und Rücklauf unterworfen ist.

Mit dieser Anordnung wird erreicht, dass ein einwandfreies Erfassen und Zusammenpressen insbesondere auch von sperrigem Müll dadurch gewährleistet ist, dass die Walze aufgrund des Eigengewichtes auf den Müll auftrifft, weil hierdurch die Möglichkeit geschaffen ist, dass bei einem nicht sofortigen Zerkleinern des Mülls die Walze auch wieder aus einer tieferen Lage in eine höhere Lage gehoben werden kann, wodurch eine gleichmässigere Zerkleinerung ohne Überlastung der Maschine gewährleistet ist. Eine entsprechende gleichmässige Zerkleinerung ist bei der bekannten Anordnung nicht möglich; denn dort wird die Walze immer auf demselben von der Hubvorrichtung bestimmten Druckniveau geführt.

Ein weiterer Vorteil gegenüber der bekannten Anordnung besteht darin, dass durch die Hin- und Herbewegung der Walze auf dem Müll, bei welcher also die Walze nach einem oder einigen Umläufen ihre Drehrichtung umkehrt und in entgegengesetzter Richtung auf dem Müll umläuft, ein Aufwickeln des Mülls auf die Walze vermieden wird. Zweckmässigerweise erfolgt die Drehrichtungsumkehr nach ein bis fünf Umläufen der Walze.

Eine solche Drehrichtungsumkehr kommt bei der bekannten Anordnung schon deswegen nicht in Betracht, weil die Schnecke den zu zerkleinernden Müll nur in einer Richtung zufördern kann.

Die Hubvorrichtung kann aus einer Führung am freien Ende des Armes des Ständers bestehen, in welcher die senkrechte Welle verschieblich geführt ist. Zu diesem Zweck kann die Welle mittels einer Zahnstange oder eines Kettentriebes senkrecht bewegbar sein, wodurch die Hubbewegung zum Zwecke des Einsetzens der Walze bzw. zum Zwecke ihres Herausnehmens bewirkt wird. Während des Verdichtungsvorganges bewegt sich die Walze aufgrund des ansteigenden Materialspiegels im Behälter ohnehin selbsttätig nach oben.

Sofern mittels der Hubvorrichtung der Arm des Ständers bewegt werden soll, kann ein Teil des Ständers teleskopartig in einem weiteren Teil geführt sein.

Der Antrieb der Walze kann innerhalb der Walze selbst angeordnet sein, wobei das Ende des die Walze tragenden Trägers gegenüber dem Ende der Welle drehbar gelagert ist, so dass die Walze umlaufen kann.

Eine weitere Möglichkeit des Antriebes besteht darin, die Welle durch ein äusseres ortsfestes Rohr hindurchzuführen und mit einem oberhalb des Armes des Ständers oder im Bereich von dessen oberen Ende angeordneten Antriebsmotor anzutreiben, wobei der die Walze tragende Träger fest mit dem Wellenende verbunden ist. Auf diese Weise wird die Welle mittels des aussenliegenden Motors gedreht, so dass die Walze auf ihrem Träger freilaufend über den Müll geführt wird.

Eine andere Möglichkeit besteht darin, mittels der drehbaren Welle ein als Winkelgetriebe ausgebildetes Stirn- oder Kegelradgetriebe im Bereich der Walzenachse und über dieses die Walze anzutreiben. Bei dieser Antriebsart treten relativ geringe Wellen- und Lagerbeanspruchungen auf.

In den beiden zuletzt genannten Fällen führt zweckmässigerweise das äussere ortsfeste Rohr die Hubbewegung gegenüber dem Arm des Ständers aus.

Anstelle einer Walze können auch mehrere Walzen, zweckmässigerweise zwei einander gegenüberliegende Walzen, vorgesehen sein, da es hierdurch zu einer relativ gleichmässigen Krafteinleitung in die Achse oder Welle kommt. Die beiden Walzen können in diesem Fall gemeinsam durch ein Kegelrad- oder Planetengetriebe angetrieben werden.

Vorteilhaft ist es, wenn die Walzen zylinderförmig sind, da auf diese Weise eine grössere Relativgeschwindigkeit zum Müll im aussenliegenden Bereich der Walze als im inneren Bereich eintritt. Dies hat den Vorteil, dass aufgrund der unterschiedlichen Geschwindigkeiten der von der Walze bearbeitete Müll gegeneinander verdreht oder verdrillt wird, wodurch ein Durchwalken und damit eine bessere Verdichtung auftritt.

Die senkrechte Welle kann an ihrem oberen Ende durch ein Stirnradgetriebe mit einem Getriebemotor verbunden sein, der seinerseits unter Zwischenschaltung einer Kupplung einen Riementrieb, vorzugsweise einen Zahnriementrieb, beaufschlagt, welcher eine Spindel zur Höhenverstellung des Armes einschliesslich der daran angeordneten Getriebeteile und der Walze betätigt. Die einschaltbare Kupplung kann zweckmässigerweise in der Riemenscheibe angeordnet sein.

Die Verstellung mittels der Spindel dient dem Aus- und Einfahren der Walze in den den zu verdichtenden Müll enthaltenden Behälter.

Hierzu ist die Spindel in einem im Quadrat vorzugsweise rechteckigen Spindelrohr gelagert, an dessen oberen Ende eine Spindelmutter ortsfest angeordnet ist. Das Spindelrohr ist seinerseits verschieblich in einem an dem senkrechten Ständer verschieblichen Führungsschlitten geführt, wobei sich das untere Ende des Spindelrohres auf einer Bodenplatte oder dgl. des Ständers abstützen kann.

Der Führungsschlitten ist mit Führungsrollen versehen, die in Führungsnuten des Ständers laufen. Zweckmässigerweise sind in einer Querschnittsebene jeweils drei Führungsrollen angeordnet, von denen zwei seitlich in entsprechende Nuten des Ständers eingreifen, während die dritte Führungsrolle nach hinten weist und in eine dort vorgesehene Nut des Ständers eingreift.

Über die Höhe des Führungsschlittens können in Abhängigkeit von den statischen oder Halteerfordernissen mehrere Sätze dieser Führungsrollen vorgesehen sein.

Hierbei hat es sich als vorteilhaft erwiesen, wenn im oberen Abschnitt des Führungsschlittens wenigstens zwei Sätze von Führungsrollen enger beieinander angeordnet sind als im unteren Abschnitt, da sich herausgestellt hat, dass im Betrieb ein ungleichmässigeres Zusammenpressen im unteren Bereich des Behälters als im oberen Bereich auftritt, so dass beim Zusammenpressen im unteren Bereich zusätzliche Abstützungen erforderlich sind. Wird im oberen Bereich zusammengepresst, so können die Sätze der Führungsrollen gegebenenfalls auch nach oben aus den Nuten des Ständers herausgefahren sein.

Da im unteren Bereich des Behälters, wenn also noch relativ wenig zusammenzupressendes Material sich im Behälter befindet, das eine entsprechend geringere Elastizität aufweist, es nachteilig sein kann, wenn das volle Eigengewicht der Walze einschliesslich ihres Antriebes auf dieser relativ dünnen Schicht zusammenzupressenden Materials aufliegt, kann erfindungsgemäss weiter vorgesehen sein, dass zwischen dem Führungsschlitten und dem Ständer wenigstens eine Feder angeordnet ist, die im unteren Bereich des Behälters den Druck, den die Walze auf das zusammenzupressende Material ausübt, verringert.

Die Feder kann eine Druckfeder sein, die zwischen einem auskragenden Teil des Führungsschlittens und dem Boden des Ständers angeordnet ist. Besonders zweckmässig kann jedoch eine Zugfeder sein, deren oberes Ende am Ständer und deren unteres Ende am Führungsschlitten angreift. Die Verwendung einer Zugfeder hat den Vorteil, dass ein bei einer Druckfeder erforderliches Stützgehäuse entfallen kann.

Zweckmässig ist es, wenn die Walze auf ihrem Umfang mit in den zusammenzupressenden Müll eingreifenden Zähnen mit dreieckförmigem Querschnitt versehen ist und die Zähne entlang einer Mantellinie der Walze verlaufen. Bei einer bevorzugten Ausführungsform haben diese Zähne die Form eines Zeltdaches, welches eine nach aussen weisende Spitze hat, die zur freien Stirnfläche der Walze hin vorsteht. Auf diese Weise werden Verklemmungen zwischen den dreieckförmigen Zähnen und der Aussenwandung des Behälters vermieden, und es wird ausserdem verhindert, dass sich die Zähne zu tief in den Müll eingraben.

Andere Formen der Zähne sind möglich, sofern nur das obengenannte Kriterium der zur freien Stirnseite nach aussen hinweisenden Spitze des Zahnes erfüllt ist.

Demselben Zweck dient eine ballige Ausführung der Stirnseite der Walze, so dass die Stirnfläche der Walze ihren höchsten Punkt im Achsbereich hat, da auch auf diese Weise verhindert wird, dass sich zusammenzupressender Müll zwischen der Stirnseite der Walze und der Innenwandung des Behälters festklemmen kann.

Um mittels der Walze auch den Müll im Zentrum des Behälters zusammenpressen zu können, kann erfindungsgemäss weiter vorgesehen sein, dass im Bereich unterhalb der senkrechten Welle ein Stützfuss angeordnet ist, der auf dem Müll aufliegt und dessen Unterfläche etwa in einer Ebene mit der jeweils untersten Mantellinie der Walze liegt.

Zweckmässig ist es, wenn bei der erfindungsgemässen Anordnung der Ständer auf einer gabelförmigen Grundplatte steht, in die eine den zusammenzupressenden Müll tragende Palette oder dgl. eingeschoben werden kann.

Zweckmässig ist es weiter, wenn der den Müll aufnehmende Behälter als bodenlose Wandung ausgebildet ist, die mit nach vorne zu öffnenden Klapptüren versehen ist, da es mit der erfindungsgemässen Vorrichtung möglich ist, den Müll so zusammenzupressen, dass er nach dem Zusammenpressen einen festen Ballen bildet, der durch Auflager auf die Palette entfernbar ist.

Um in diesem Fall ein Herausdrücken des zusammenzupressenden Mülls zwischen den Unterkanten dieser Behälterwandungen und einer unteren Auflage, beispielsweise einer Palette zu verhindern, ist weiter vorgesehen, an den Unterkanten der Behälterwandungen im rechten Winkel oder schräg nach unten weisende Flansche anzuordnen, die den zusammenzupressenden Müll im Bereich der Unterkanten der Behälterwandungen abstützen und damit ein seitliches Herausquetschen des Mülls zwischen diesen Unterkanten und der Aufnahmefläche verhindern.

Um einen solchen Behälter bis zum oberen Rand füllen zu können, ist es zweckmässig, wenn auf diesen Behälter ein Behälteroberteil aufsetzbar ist, welches ebenfalls mit Klapptüren versehen ist, damit der zusammenzupressende Müll im letzten Stadium des Zusammenpressvorganges nicht nach aussen gedrückt wird. Dieses Behälteroberteil hat mithin auch eine Schutzfunktion für die Bedienungsperson, indem dadurch ein ungewolltes Eingreifen in die im Betrieb befindliche Walze verhindert wird.

Das Behälteroberteil ist zweckmässigerweise ebenfalls nach oben offen, so dass eine zusätzliche Zufuhr von Müll im geschlossenen Zustand beider Behälterteile möglich ist.

Zur Abdeckung der Spindel zu den Behälterteilen hin ist am Führungsschlitten eine Führungsschiene angeordnet, deren Seitenkanten in durch Blechumwicklungen gebildete Nuten von Führungen am Behälteroberteil eingreifen. Die auf diese Weise hergestellte Führungsverbindung zwischen der Führungsschiene und den Umwinkelungen am Behälteroberteil ermöglicht es, im unteren Bereich der Führungsschiene eine Auflagerfläche vorzusehen, auf welcher sich die Umwinkelungen des Behälteroberteiles abstützen können. Auf diese Weise wird es möglich, durch Bewegung des Führungsschlittens nach oben das Behälteroberteil vom Behälterunterteil abzuheben und gleichzeitig die Walze aus dem Behälterunterteil herauszunehmen bzw. vom Müll abzuheben.

Im übrigen ist die Wirkungsweise der beschriebenen Anordnung folgende:

Nach einem Einsatz einer Auflage für den zusammenzupressenden Müll, insbesondere einer Palette zwischen die beiden Gabeln des Ständers, wird das Behälterunterteil auf die Gabeln aufgesetzt und geschlossen.

Zuvor wurde die Walze zusammen mit ihrem Antrieb nach oben gefahren, indem die Kupplung zwischem dem Getriebemotor und dem die Spindel betätigenden Riementrieb eingeschaltet wurde, so dass die Spindel gedreht wurde und durch die Relativbewegung zu ihrer Mutter das Spindelrohr der Spindel nach unten gefahren wurde.

Durch Abstützen des Spindelrohres auf der unteren Auflagefläche des Ständers bewegt auf diese Weise die Spindel den Antrieb und die Walze nach oben.

Nach Schliessen des Behälters wird durch eine Betätigung der Spindel in umgekehrter Richtung die Walze einschliesslich ihres Antriebes in den Behälter abgesenkt, wobei die Walze sofort zu arbeiten beginnt, da sie über das Stirnradgetriebe in ständiger Antriebsverbindung mit dem Motor steht.

Nach Einstellung der Walze wird die reversible Bewegung über einen Zeitschalter gesteuert, so dass die Walze nunmehr ihre hin- und hergehende Bewegung ausführt. Während des Arbeitens der Walze wird der untere Behälter nach und nach mit immer mehr Müll gefüllt, wobei die Walze aufgrund ihres Eigengewichtes auf dem Müll aufliegt und diesen zusammenpresst, sich gleichzeitig aber nach oben bewegt. Während dieses Arbeitsvorganges ist der Antrieb für die Spindel abgekuppelt, so dass bei der Aufwärtsbewegung der Walze sich sowohl der Führungsschlitten als auch das Spindelrohr zusammen mit der Spindel am Ständer nach oben bewegen.

Im unteren Bereich der Komprimierung wird das Eigengewicht der Walze bzw. der von der Walze ausgeübte Druck durch die dort angeordnete Feder in der beschriebenen Weise verringert.

Erreicht der Müll und damit die Walze den oberen Rand des unteren Behälterteiles, so wird in der beschriebenen Weise durch Einschalten der Kupplung zum Antrieb der Spindel die Spindel in Tätigkeit gesetzt, so dass die Walze vom Müll abgehoben wird und sich der gesamte Antrieb einschliesslich des oberen Behälterteiles nach oben bewegt.

Die Erfindung wird im folgenden anhand von Ausführungsbeispielen in der Zeichnung näher erläutert.

Fig. 1 zeigt in schematischer Darstellung eine Ausführungsform der erfindungsgemässen Vorrichtung.

Fig. 2 ist der Schnitt II-II nach Fig. 1.

Fig. 3 zeigt in schematischer Darstellung eine weitere Ausführungsform.

Fig. 4 zeigt in perspektivischer Darstellung eine Ausführungsform ähnlich Fig. 3 mit weiteren Einzelheiten.

Fig. 5 zeigt in perspektivischer Darstellung einen Teil der Anordnung nach Fig. 4 bei mittels der Spindel angehobenem Arm.

Fig. 6 zeigt in Seitenansicht einen Ausschnitt aus der Anordnung nach Fig. 4.

Fig. 7 ist die Draufsicht auf die Anordnung nach Fig. 4.

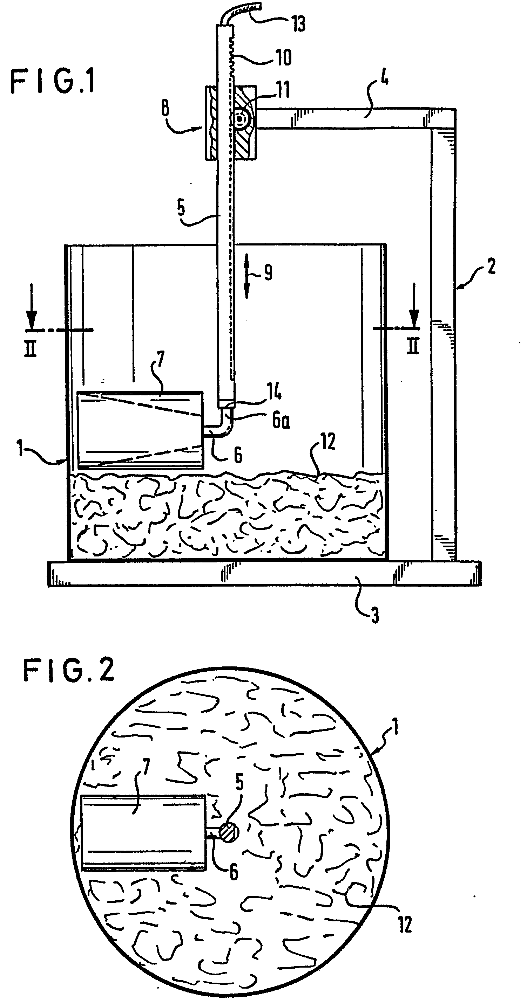

Gemäss den Fig. 1 und 2 ist ein zylindrischer nach oben offener Müllbehälter 1 vorgesehen, in welchem Müll verdichtet werden soll. Die erfindungsgemässe Vorrichtung hierzu besteht aus einem Ständer 2, der mit einer den Behälter 1 untergreifenden Bodenplatte 3 verbunden sein kann, wobei der Ständer 2 einen den Müllbehälter 1 übergreifenden Arm 4 aufweist, an dessen Ende eine senkrecht sich erstreckende Welle 5 angeordnet ist, deren unteres Ende mit wenigstens einem sich horizontal erstreckenden Träger 6 versehen ist, auf welchem eine zylindrische Verdichtungwalze 7 drehbar gelagert ist.

Die Welle 5 ist beim Ausführungsbeispiel nach Fig. 1 in einer Hubvorrichtung 8 am Ende des Armes 4 geführt und mittels dieser in Richtung des Pfeiles 9 auf- und abbewegbar. Hierzu kann sie mittels eines Kettentriebes beaufschlagbar sein; beim in Fig. 1 dargestellten Ausführungsbeispiel ist eine Zahnstange oder ein Zahnstangenabschnitt 10 der Welle 5 vorgesehen, in welchem ein Ritzel 11 eingreift, um die Welle 5 auf- und abbewegen zu können.

Durch das Auflaufen auf dem in den Behälter 1 eingefüllten Müll 12 wird die Walze 7, und damit die Welle 5 je nach Füllzustand allmählich nach oben gehoben, wobei sich das Ritzel frei drehen kann.

Um die Walze 7 in den Behälter einsetzen oder aus diesem entfernen zu können, kann das Ritzel 11 vorzugsweise von Hand gedreht werden. Entsprechendes gilt für die Ausbildung der Hubvorrichtung als Kettentrieb.

Bei der Ausführungsform nach Fig. 1 befindet sich der Antrieb der Walze 7 in dieser selbst, so dass lediglich eine Stromzuführung 13 durch die Welle 5 und den Träger 6 in das Innere der Walze geführt zu werden braucht. Die Walze führt dann eine Relativdrehung gegenüber dem nicht drehbaren Träger 6 aus und rollt damit auf dem im Behälter befindlichen Müll 12 ab. Der Träger 6 ist mit einem umgewinkelten Abschnitt 6a etwa bei 14 am unteren Ende der Welle 5 drehbar gelagert, so dass die Walze 7 eine kreisförmige Zwangsbahn während ihres Umlaufens beschreibt.

Beim dargestellten Ausführungsbeispiel ist die Walze 7 zylindrisch ausgebildet, so dass im aussenliegenden Bereich der Walze eine grössere Relativgeschwindigkeit zum Müll als im inneren Bereich auftritt. Damit wird ein besseres Durchwalken und eine bessere Verdichtung erzielt.

In Sonderfällen kann zur Erzielung gleicher Relativgeschwindigkeiten, wie in Fig. 1 gestrichelt angedeutet, die Walze auch konisch ausgebildet sein.

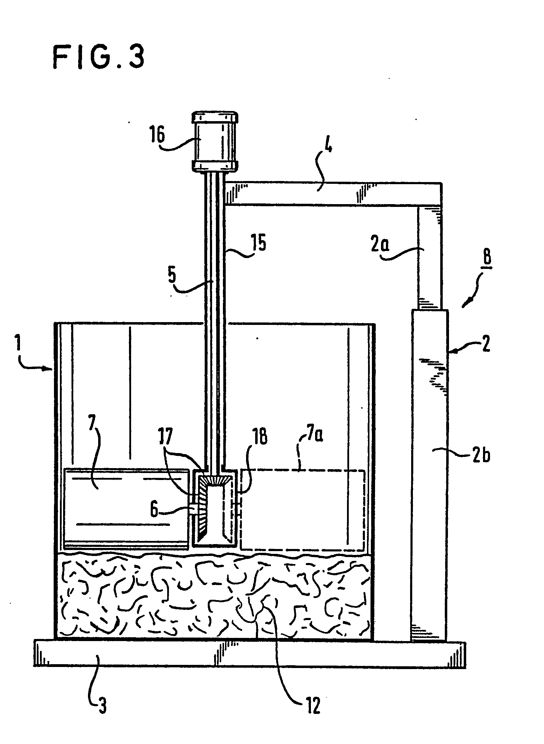

Fig. 3 ist eine schematische Darstellung ähnlich Fig. 1 bei einer abgewandelten Ausführungsform. Es ist hier am freien Ende des Armes 4 ein ortsfestes Rohr 15 angeordnet, durch welches die Welle 5 geführt ist, die bei dieser Ausführungsform mittels eines oberhalb des Armes 4 angeordneten Motors 16 angetrieben ist. Die Welle 5 treibt ein Kegelradgetriebe 17 an, das seinerseits dem Antrieb der Walze 7 dient, deren Träger 6 bei dieser Ausführungsform drehbar im gegenüber dem Rohr 15 drehbaren Lagergehäuse 18 des Kegelradgetriebes 17 gelagert ist. Die Hubvorrichtung 8 besteht bei dieser Ausführrungsform in einer Teilung des Ständers 2, wobei ein Teil 2a teleskopartig in ein weiteres Teil 2b des Ständers eingreift.

Wie gestrichelt angedeutet, können weitere Walzen 7a vorgesehen sein, wobei vorzugsweise zwei einander gegenüberliegende Walzen vorgesehen sein können. Die beiden gegenüberliegenden Walzen 7 und 7a können gemeinsam durch das entsprechend ergänzte Kegelradgetriebe 17 angetrieben sein.

Bei beiden Ausführungsformen werden die Walzen dadurch hin- und herbewegt, dass sie zunächst vorund anschliessend zurücklaufen. Die jeweilige Umschaltung erfolgt nach ein bis fünf Umläufen der Walze 7.

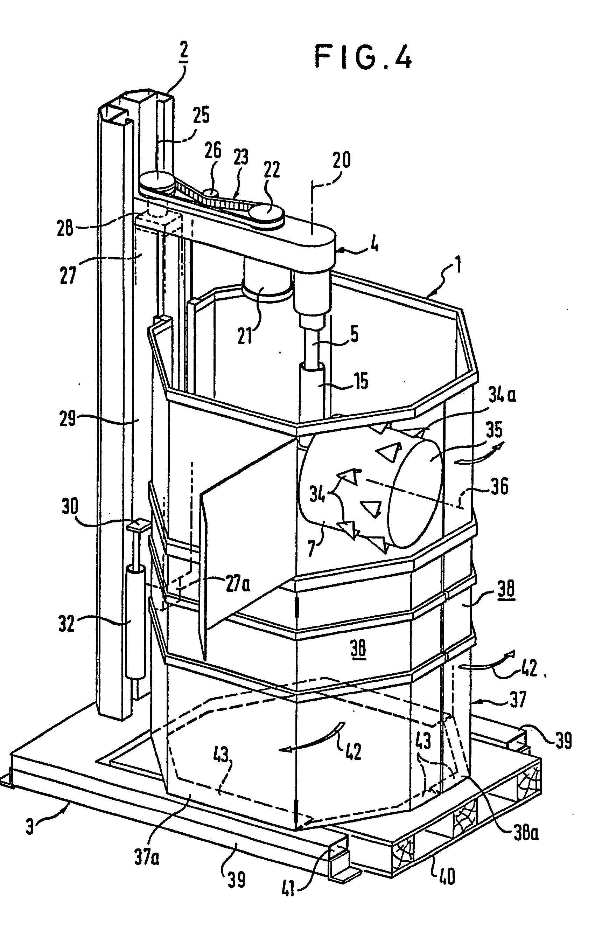

Fig. 4 zeigt in perspektivischer Darstellung eine Ausführungsform der erfindungsgemässen Vorrichtung, ähnlich Fig. 3, mit weiteren Einzelheiten.

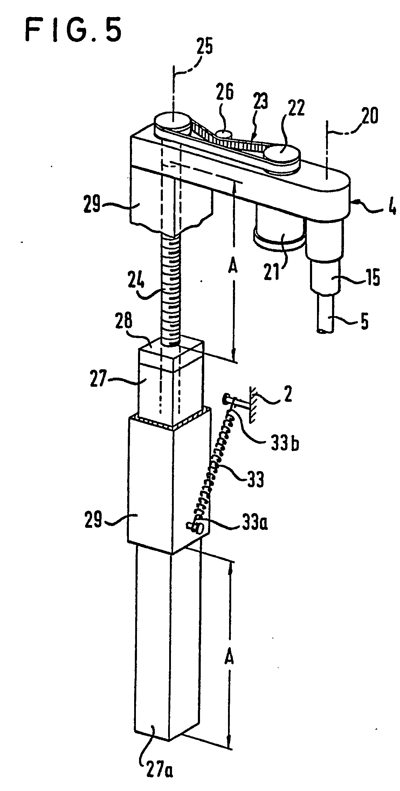

Gemäss Fig. 4 ist die in dem Rohr 15 angeordnete senkrechte drehbare Welle 5, deren Achse in Fig. 4 mit 20 bezeichnet ist, an ihrem oberen Ende durch ein nicht dargestelltes Stirnradgetriebe mit einem Getriebemotor 21 verbunden, der seinerseits unter Zwischenschaltung einer in einer Riemenscheibe 22 angeordneten Kupplung einen Riementrieb 23 beaufschlagt, welcher eine Spindel 24 (vgl. Fig. 5) zur Höhenverstellung des Armes 4 einschliesslich der daran angeordneten Getriebeteile und der Walze 7 betätigt. Die Achse der Spindel 24 ist in Fig. 4 mit 25 bezeichnet.

Der Riementrieb 23 kann zweckmässigerweise ein Zahnriementrieb sein, wobei die Spannrolle des Riementriebes in Fig. 4 mit 26 bezeichnet ist.

Die Spindel 24 ist in einem im Querschnitt vorzugsweise rechteckigen Spindelrohr 27 (vgl. auch Fig. 5) gelagert, an dessen oberem Ende eine Spindelmutter 28 (vgl. Fig. 5) ortsfest angeordnet ist.

Das Spindelrohr 27 ist seinerseits verschieblich in einem an dem senkrechten Ständer 2 verschieblichen Führungsschlitten 29 (vgl. auch Fig. 5) geführt, wobei sich das untere Ende des Spindelrohres 27a auf der Bodenplatte 3 des Ständers 2 abstützen kann.

Zwischen einem auskragenden Teil 30 des Führungsschlittens 29 und dem Ständer 2 oder der Bodenplatte 3 kann eine Druckfeder 31 angeordnet sein, auf welcher sich der Führungsschlitten im unteren Arbeitsbereich der Vorrichtung abstützt. Die Druckfeder 31 kann, um ein seitliches Ausknicken zu verhindern, in einem Führungsrohr 32 angeordnet sein, das am Ständer 2 oder auf der Bodenplatte 3 befestigt sein kann. Die Druckfeder kann durch einen am Teil 30 befestigten und in das Führungsrohr 32 eintauchenden Stab beaufschlagt sein.

Eine andere Ausführungsform ist in Fig. 5 dargestellt und besteht darin, dass die Feder eine Zugfeder 33 ist, deren unteres Ende 33a am Führungsschlitten 29 und deren oberes Ende 33b am Ständer 2 angreift. Auch auf diese Weise wird bei einer Abwärtsbewegung des Führungsschlittens 29 durch die von der Zugfeder aufgebrachte Kraft der Arbeitsdruck der Walze im unteren Bereich verringert.

Wie aus Fig. 4 weiter hervorgeht, ist die Walze 7 auf ihrem Umfang mit in den zusammenzupressenden Müll eingreifenden Zähnen 34 versehen, welche die Form eines Zeltdaches haben, so dass jeweils eine nach aussen weisende Spitze 34a gebildet wird, die zur freien Stirnfläche 35 der Walze hin vorsteht. Auf diese Weise werden Verklemmungen zwischen den dreieckförmigen Zähnen 34 und der Aussenwandung des Behälters 1 vermieden und ausserdem wird durch die zur Achse 20 der Welle 5 hin fallende Form der Zähne 34 der zu verdichtende Müll von aussen nach innen gezogen.

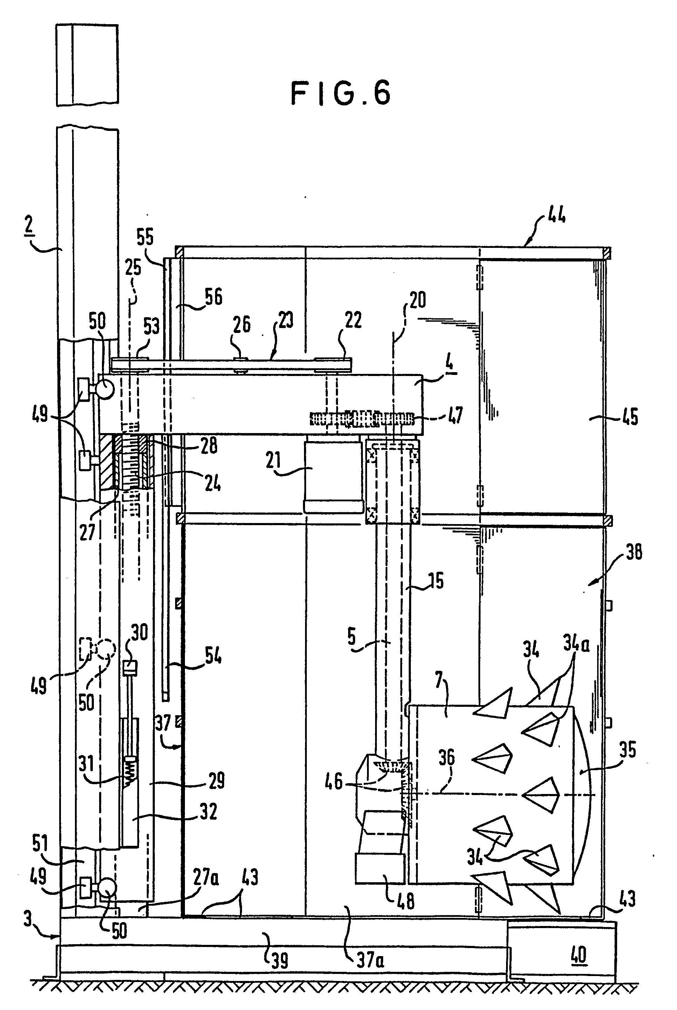

Die Stirnseite 35 hat zweckmässigerweise eine ballige Form (vgl. Fig. 6), so dass die Stirnfläche ihren höchsten Punkt im Bereich der Achse 36 der Walze 7 hat. Auf diese Weise wird verhindert, dass sich zusammenzupressender Müll zwischen der Stirnseite 35 und der Innenwandung des Behälters festklemmen kann.

Bei der in Fig. 4 dargestellten Ausführungsform besteht der Behälter 1 aus einem Behälterunterteil 37, welches als bodenlose Wandung ausgebildet und mit nach vorn zu öffnenden Klapptüren 38 versehen ist.

Gemäss Fig. 4 ist hier die Bodenplatte 3 als gabelförmige Grundplatte ausgebildet, wobei zwischen die Gabeln 39 eine den zusammenzupressenden Müll tragende Palette 40 eingeschoben werden kann. Die Gabeln 39 können mit Einschuböffnungen 41 für die Gabeln eines Gabelstaplers oder eines Hubwagens oder dgl. versehen sein, um die Gesamtvorrichtung leicht transportieren zu können.

Fig. 5 zeigt in perspektivischer Darstellung einen Teil der erfindungsgemässen Vorrichtung nach Fig. 4 bei mittels der Spindel 24 angehobenem Arm 4.

Wenn durch Einschalten der Kupplung in der Riemenscheibe 22 der Riementrieb 23 beaufschlagt wird, treibt der Getriebemotor 21 die Spindel 24 an, so dass diese beim Aushub sich gegenüber der Spindelmutter dreht und damit das Spindelrohr 27 so weit nach unten verschiebt, bis das untere Ende 27a des Spindelrohres auf der Bodenplatten 3 aufliegt.

Durch die Abstützung des unteren Teiles 27a des Spindelrohres 27 auf der Bodenplatte 3 wird nun bei einem weiteren Herausschrauben der Spindel 24 aus der Spindelmutter 28 der Arm 4 in die in Fig. 5 wiedergegebene Lage angehoben, so dass er gegenüber seiner Ausgangslage einen Abstand A hat. In dieser Lage ist die Walze 7 aus dem Behälter ausgehoben oder jedenfalls vom zusammengepressten Müll abgehoben.

Beim Einsetzen der Walze in den Behälter bzw. beim Aufsetzen auf den zusammenzupressenden Müll läuft dieser Vorgang umgekehrt ab, wobei zunächst im abgestützten Zustand des Führungsrohres 27 auf der Bodenplatte 3 die Spindel 24 in die Spindelmutter 28 eingeschraubt wird, so dass der Arm 4 mit der Walze 7 abgesenkt wird. Sobald die Walze 7 auf dem zusammenzupressenden Müll aufliegt, wird das Spindelrohr 27 über die Spindelmutter 28 nach oben verschoben, so dass nunmehr die Abstützung des Armes 4 aufgehoben ist und die Walze aufgrund ihrer Eigengewichtes auf dem Müll aufliegt.

Sobald das Spindelrohr 27 genügend vom Boden entfernt ist, so dass es aus diesen nicht mehr aufstossen kann, wird die Kupplung ausgeschaltet und der Riementrieb stillgesetzt, so dass die Relativlage zwischen Spindel und Spindelrohr nunmehr unverändert bleibt. Die weiteren Hubbewegungen der Walze erfolgen jetzt ausschliesslich aufgrund des Eigenwichtes der Walze und der zugehörigen Getriebeteile, indem sich der Führungsschlitten 29 relativ zum Ständer 2 nach oben und — bei noch nicht ausreichender Verdichtung — in gewissen Bereichen auch wieder nach unten bewegt.

Nach dem Zusammenpressen des Mülls werden die Klapptüren 38 in Richtung der Pfeile 42 geöffnet, so dass der zusammengepresste Müll als kompakter Ballen entfernbar ist, der auf der Palette 40 aufsteht.

Um ein Herausdrücken des zusammenzupressenden Mülls zwischen den Unterkanten des Behälterunterteiles 37 zu verhindern, sind an den Unterkanten 37a der Behälterwandungen und/oder an den Unterkanten 38a der Klapptüren 38 im rechten Winkel zu deren Ebene verlaufende oder schräg nach unten weisende Flansche 43 vorgesehen, die den zusammenzupressenden Müll im Bereich der Unterkanten der Behälterwandungen abstützen und ein seitliches Herausquetschen des Mülls zwischen diesen und der Aufnahmefläche verhindern.

Auf dem Behälterunterteil 37 ist ein Behälteroberteil 44 aufgesetzt, welches ebenfalls mit nach aussen zu öffnenden Klapptüren 45 versehen ist. Das Behälteroberteil 44 ist ebenfalls nach oben offen, so dass eine zusätzliche Zufuhr von Müll im geschlossenen Zustand beider Behälterteile möglich ist.

Das Behälteroberteil 44 ist im Bereich des Führungsschlittens 29 mit nicht dargestellten Umwinkelungen versehen, die bei einem Anheben des Führungsschlittens mittels der Spindel 24 mit entsprechenden Widerlagern am Führungsschlitten in Eingriff kommen, so dass bei einem Anheben des Führungsschlittens das Behälteroberteil mitgenommen und vom Behälterunterteil abgehoben wird.

Fig. 6 zeigt die Vorrichtung nach Fig. 4 in Seitenansicht in teilweise aufgebrochener Darstellung und lässt insbesondere erkennen, dass am unteren Ende der senkrechten drehbaren Welle 5 ein Winkelgetriebe 46 angeordnet ist, welches mittels des Getriebemotors 21 über ein schematisch angedeutetes Stirnradgetriebe 47 und die Welle 5 die Walze 7 antreibt, wobei mittels eines Zeitschalters die Drehrichtung nach einem oder einigen wenigen Umläufen der Walze 7 umgekehrt wird.

Im Bereich unterhalb der senkrechten Welle 5 bzw. des Winkelgetriebes 46 ist ein Stützfuss 48 angedeutet, der auf dem Müll aufliegt und dessen Unterfläche etwa in einer Ebene mit der jeweils untersten Mantellinie der Walze 7 liegt. Dieser Stützfuss dient dem Zusammenpressen des Mülls auch im Zentrum des Behälters, welches bei der dargestellten Ausführungsform von der Walze 7 nicht erreicht wird.

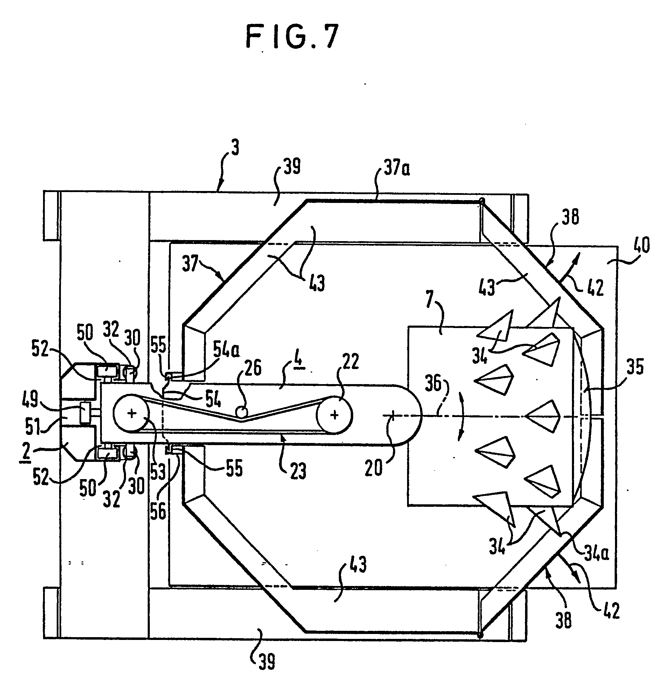

Fig. 7 ist die Draufsicht auf die Anordnung nach Fig. 4 bzw. Fig. 6 und lässt weitere Einzelheiten des Aufbaus des Führungsschlittens erkennen.

Wie aus den Fig. 6 und 7 weiter hervorgeht, ist der Führungsschlitten 29 mit Führungsrollen 49 und 50 versehen, die in Führungsnuten 51 und 52 (vgl. Fig. 7) des Ständers 2 laufen. In einer Querschnittsebene sind jeweils drei Führungsrollen angeordnet, und zwar zwei seitliche Führungsrollen 50 und eine nach hinten weisende Führungsrolle 49, die in entsprechend angeordnete Nuten des Ständers 2 eingreifen.

Gemäss Fig. 6 sind über die Höhe des Führungsschlittens 29 mehrere Sätze Führungsrollen angeordnet, wobei im oberen Abschnitt des Führungsschlittens 29 wenigstens zwei Sätze von Führungsrollen enger beieinander angeordnet sind als im unteren Abschnitt.

Wie aus den Fig. 6 und 7 weiter hervorgeht, steht eine Riemenscheibe 53 direkt mit der Spindel 24 in Verbindung, so dass die Spindel mittels des Zahnriementriebes 23 direkt angetrieben wird.

Schliesslich geht aus Fig. 7 hervor, dass auch zwei Federn beidseits des Ständers 2 bzw. des Führungsschlittens 29 angeordnet sein können, wobei beim in Fig. 7 dargestellten Ausführungsbeispiel es sich um zwei Druckfedern handelt, die in jeweils einem Stützgehäuse 32 angeordnet sind und durch ein auskragendes Teil 30 am Führungsschlitten 29 (vgl. auch Fig. 6) beaufschlagt werden.

Die Spindel 24 bzw. ihr Spindelrohr 27 ist zum Behälter hin durch eine am Führungsschlitten 29 angeordnete Führungsschiene 54 abgedeckt; deren Seitenkanten 54a in durch Blechumwinklungen gebildete Nuten 55 von Führungen 56 am Behälterboden 44 eingreifen. Im unteren Bereich der Führungsschiene 54 sind die bereits beschriebenen Auflager vorgesehen, auf welche sich Umwinklungen des Behälteroberteiles 44 bei einer Aufwärtsbewegung des Führungsschlittens 29 zum Zwecke des Abhebens des Behälteroberteiles abstützen können.

### Patentansprüche

1. Vorrichtung zum Verdichten von aus Verpackungsmaterial und leicht pressbaren Abfällen bestehenden Müll, wie Kartonagen, leichte Kunststoff- und Holzverpackungen, Papier, Abfälle von Zuschnitten sowie Holz-, Kunststoff- und Metallspäne, bestehend aus einem nach oben offenen Müllbehälter (1), einer in den Behälter eingreifenden und auf dem Müll kreisförmig umlaufenden, von einem den Behälter übergreifenden Ständer (2) getragenen Verdichtungswalze (7), die während des Verdichtungsvorganges mit steigender Füllmenge des Behälters eine senkrechte Relativbewegung gegenüber dem Behälter durchführen kann, dadurch gekennzeichnet, dass an einem den Müllbehälter (1) übergreifenden Arm (4) des Ständers (2) eine senkrecht sich erstreckende Welle (5) angeordnet ist, an deren unterem Ende wenigstens ein sich horizontal erstreckender und um die Welle (5) drehbarer Träger (6) vorgesehen ist, auf welchem die Walze (7) drehbar gelagert ist, wobei die Walze (7) aufgrund ihres Eigengewichtes auf dem Müll (12) aufliegt und der Arm (4) in Verbindung mit einer ständerseitigen Hubvorrichtung (8) steht, welche einen Hub der Walze (7) aufgrund ihres Eigengewichtes zulässt und wobei die Walze (7) einem kontinuierlich wechselnden Vor- und Rücklauf unterworfen ist.

2. Vorrichtung nach Anspruch 1, dadurch gekennzeichnet, dass die Drehrichtungsumkehr der Walze (7) nach ein bis fünf Umläufen erfolgt.

3. Vorrichtung nach Anspruch 1, dadurch gekennzeichnet, dass der die Welle (5) tragende Arm (4) des Ständers (2) mittels der Hubvorrichtung (8) senkrecht bewegbar ist.

4. Vorrichtung nach Anspruch 1, dadurch gekennzeichnet, dass die Hubvorrichtung aus einer Führung am freien Ende des Armes (4) des Ständers (2) besteht, in welcher die senkrechte Welle (5) verschieblich geführt ist.

5. Vorrichtung nach Anspruch 4, dadurch gekennzeichnet, dass die Welle (5) mittels einer Zahnstange (10) oder eines Zahnstangenabschnittes mit zugehörigem Ritzel (11) oder mittels eines Kettentriebes senkrecht bewegbar ist.

6. Vorrichtung nach Anspruch 3, dadurch gekennzeichnet, dass ein Teil (2a) des Ständers (2) teleskopartig in einen weiteren Teil (2b) des Ständers geführt ist.

7. Vorrichtung nach einem der vorhergehenden Ansprüche, dadurch gekennzeichnet, dass der Antrieb der Walze (7) innerhalb dieser angeordnet ist, wobei das Ende des die Walze (7) tragenden Trägers (6) gegenüber dem Ende (14) der Welle (5) drehbar gelagert ist, so dass die Walze (7) umlaufen kann.

8. Vorrichtung nach einem der Ansprüche 1 bis 6, dadurch gekennzeichnet, dass die Welle (5) durch ein äusseres ortsfestes Rohr (5) hindurchgeführt und mit einem oberhalb des Armes (4) des Ständers (2) oder im Bereich von dessen oberem Ende angeordneten Antriebsmotor (16) angetrieben ist, wobei der die Walze (7) tragende Träger (6) fest mit dem unteren Ende der Welle (5) verbunden ist.

9. Vorrichtung nach einem der Ansprüche 1 bis 6, dadurch gekennzeichnet, dass mittels der Welle (5) ein als Winkelgetriebe ausgebildetes Stirn- oder Kegelradgetriebe (17) im Bereich der Walzenachse und über dieses die Walze (7) angetrieben ist, wobei die Welle (5) mittels eines im Bereich des Armes (4) des Ständers (2) angeordneten Antriebsmotors (16) angetrieben ist.

10. Vorrichtung nach Anspruch 9, dadurch gekennzeichnet, dass die Welle (5) durch ein äusseres ortsfestes Rohr (15) hindurchgeführt ist, das an seinem unteren Ende das Lagergehäuse (18) für das Stirn- oder Kegelradgetriebe (17) trägt.

11. Vorrichtung nach Anspruch 8 oder 10, dadurch gekennzeichnet, dass das äussere ortsfeste Rohr (15) die Hubbewegung gegenüber dem Arm (4) des Ständers (2) ausführt.

12. Vorrichtung nach einem der vorhergehenden Ansprüche, dadurch gekennzeichnet, dass mehrere Walzen, vorzugsweise zwei einander gegenüberliegende Walzen (7, 7a) vorgesehen sind.

13. Vorrichtung nach Anspruch 12, dadurch gekennzeichnet, dass die beiden Walzen gemeinsam durch ein Kegelrad- oder Planetengetriebe (17) angetrieben sind.

14. Vorrichtung nach einem der vorhergehenden Ansprüche, dadurch gekennzeichnet, dass die Walzen (7, 7a) zylinderförmig sind.

15. Vorrichtung nach einem der Ansprüche 9 bis 14, dadurch gekennzeichnet, dass die senkrechte Welle (5) an ihrem oberen Ende durch ein Stirnradgetriebe (47) oder dgl. mit einem Getriebemotor (21) verbunden ist, der seinerseits unter Zwischenschaltung einer Kupplung (22) einen Riementrieb beaufschlagt, welcher eine Spindel (24) zur Höhenverstellung des Armes (4) einschliesslich der daran angeordneten Getriebeteile und der Walze (7) betätigt.

16. Vorrichtung nach Anspruch 15, dadurch gekennzeichnet, dass der Riementrieb (23) ein Zahnriementrieb ist.

17. Vorrichtung nach Anspruch 15 oder 16, dadurch gekennzeichnet, dass die einschaltbare Kupplung in der dem Getriebemotor (21) zugeordneten Riemenscheibe (22) angeordnet ist.

18. Vorrichtung nach einem der Ansprüche 15 bis 17, dadurch gekennzeichnet, dass die Spindel (24) in einem im Querschnitt vorzugsweise rechteckigen Spindelrohr (27) gelagert ist, an dessen oberem Ende wenigstens eine Spindelmutter (28) ortsfest angeordnet ist.

19. Vorrichtung nach Anspruch 18, dadurch gekennzeichnet, dass das Spindelrohr (24) verschieblich in einem an dem senkrechten Ständer (2) verschieblichen Führungsschlitten (29) geführt ist, wobei sich das untere Ende (27a) des Spindelrohres (27) auf einer Bodenplatte (3) oder dgl. des Ständers (2) abstützen kann.

20. Vorrichtung nach Anspruch 19, dadurch gekennzeichnet, dass der Führungsschlitten (29) mit Führungsrollen (49, 50) versehen ist, die in Führungsnuten (51, 52) des Ständers (2) laufen.

21. Vorrichtung nach Anspruch 20, dadurch gekennzeichnet, dass in einer Querschnittsebene jeweils drei Führungsrollen (49, 50) angeordnet sind, von denen zwei (50) seitlich in entsprechende Nuten (52) des Ständers (2) eingreifen, während die dritte Führungsrolle (49) nach hinten weist und in eine dort vorgesehene Nut (51) des Ständers (2) eingreift.

22. Vorrichtung nach Anspruch 21, dadurch gekennzeichnet, dass über die Höhe des Führungsschlittens (29) zwei oder mehrere Sätze dieser Führungsrollen (49, 50) vorgesehen sind.

23. Vorrichtung nach Anspruch 22, dadurch gekennzeichnet, dass im oberen Abschnitt des Führungsschlittens (29) wenigstens zwei Sätze von Führungsrollen (49, 50) enger beieinander angeordnet sind als im unteren Abschnitt.

24. Vorrichtung nach einem der Ansprüche 19 bis 23, dadurch gekennzeichnet, dass zwischen dem Führungsschlitten (29) und dem Ständer (2, 3) wenigstens eine Feder (31, 33) angeordnet ist, die im unteren Bereich des Behälters (1) den Druck, den die Walze (7) auf das zusammenzupressende Material ausübt, verringert.

25. Vorrichtung nach Anspruch 24, dadurch gekennzeichnet, dass die Feder (31) eine Druckfeder ist, die zwischen einem auskragenden Teil (30) des Führungsschlittens (29) und dem Ständer (2) oder dessen Bodenplatte (3) angeordnet ist.

26. Vorrichtung nach Anspruch 24, dadurch gekennzeichnet, dass die Feder (33) eine Zugfeder ist, deren oberes Ende (33b) am Ständer (2) und deren unteres Ende am Führungsschlitten (29) angreift.

27. Vorrichtung nach einem der vorhergehenden Ansprüche, dadurch gekennzeichnet, dass die Walze (7) auf ihrem Umfang mit in den zusammenzupressenden Müll eingreifenden Zähnen (34) mit dreieckförmigem Querschnitt versehen ist, wobei die Zähne entlang einer Mantellinie der Walze (7) verlaufen.

28. Vorrichtung nach Anspruch 27, dadurch gekennzeichnet, dass die Zähne (34) die Form eines Zeltdaches haben, welches eine nach aussen weisende Spitze (34a) hat, die zur freien Stirnfläche (35) der Walze (7) hin vorsteht.

29. Vorrichtung nach einem der vorhergehenden Ansprüche, dadurch gekennzeichnet, dass die Stirnseite (35) der Walze eine ballige Form hat, wobei die Stirnseite ihren höchsten Punkt im Bereich der Achse (36) der Walze (7) hat.

30. Vorrichtung nach einem der vorhergehenden Ansprüche, dadurch gekennzeichnet, dass im Bereich unterhalb der senkrechten Welle (5) bzw. unterhalb des Winkelgetriebes (46) ein Stützfuss (48) angeordnet ist, der auf dem Müll aufliegt und dessen Unterfläche etwa in einer Ebene mit der jeweils untersten Mantellinie der Walze (7) liegt.

31. Vorrichtung nach einem der vorhergehenden Ansprüche, dadurch gekennzeichnet, dass die Bodenplatte (3) des Ständers (2) gabelförmig ausgebildet ist, wobei zwischen die beiden Gabeln (39) eine den zusammenzupressenden Müll tragende Palette (40) oder dgl. einschiebbar ist.

32. Vorrichtung nach Anspruch 31, dadurch gekennzeichnet, dass die freien Enden der Gabeln (39) mit Einschubtaschen (41) zur Aufnahme der Gabeln eines Gabelstaplers oder eines Hubwagens versehen sind.

33. Vorrichtung nach einem der vorhergehenden Ansprüche, dadurch gekennzeichnet, dass der den Müll aufnehmende Behälter (1) ein bodenloses Behälterunterteil (37) aufweist, welches mit nach aussen hin öffnenden Klapptüren (38) versehen ist.

34. Vorrichtung nach Anspruch 33, dadurch gekennzeichnet, dass an den Unterkanten (37a) der Behälterwandungen des Behälterunterteiles (37) und/oder an den Behälterunterkanten (38a) der Klapptüren (38) im rechten Winkel zu deren Ebenen verlaufende oder schräg nach unten weisende Flansche (43) angeordnet sind, die den zusammenzupressenden Müll im Bereich der Unterkanten der Behälterwandungen abstützen.

35. Vorrichtung nach Anspruch 33 oder 34, dadurch gekennzeichnet, dass auf das Behälterunterteil (37) ein Behälteroberteil (44) aufsetzbar ist, welches ebenfalls mit nach aussen zu öffnenden Klapptüren (45) versehen ist.

36. Vorrichtung nach Anspruch 35, dadurch gekennzeichnet, dass das Behälteroberteil (44) nach oben offen ist.

37. Vorrichtung nach einem der Ansprüche 15 bis 36, dadurch gekennzeichnet, dass zur Abdeckung der Spindel (24) bzw. des Spindelrohres (27) zu den Behälterteilen (37, 44) hin am Führungsschlitten (29) eine Führungsschiene (54) angeordnet ist, deren Seitenkanten (54a) in durch Blechumwinklungen gebildete Nuten (55) von Führungen (56) am Behälteroberteil (44) eingreifen.

38. Vorrichtung nach Anspruch 37, dadurch gekennzeichnet, dass im unteren Bereich der Führungsschiene (54) eine Auflagerfläche vorgesehen ist, auf welcher sich Umwinklungen des Behälteroberteiles (44) bei einer Aufwärtsbewegung des Führungsschlittens (29) abstützen.

39. Vorrichtung nach einem der vorhergehenden Ansprüche, dadurch gekennzeichnet, dass die reversible Bewegung der Walze (7) über einen Zeitschalter gesteuert wird.

**Claims**

1. Compacting device for garbage consisting of packing material and easily compressible waste material, such as cardboard containers, light plastics and wood packagings, paper, waste material from blanks as well as wood, plastics and metal shavings, consisting of an upwardly-open garbage container (1), a compacting roller (7) which extends into the container which revolves circularly on the garbage and which is carried by an upright (2) extending over the container and which during the compacting procedure with a rising filling in the container can carry out a perpendicular relative movement relative to the container, characterised in that arranged on an arm (4), engaging over the garbage container (1), of the upright (2) is a perpendicularly extending shaft (5) provided on the lower end of which is at least one horizontally extending support (6) which is rotatable about the shaft (5) and on which the roller (7) is rotatably mounted, in which the roller (7) rests by reason of its own weight on the garbage (12) and the arm (4) connects with an upright lifting device (8) which allows a lift of the roller (7) by reason of its own weight and by which the roller (7) is subjected to a continuously alternating to and fro movement.

2. Device according to claim 1, characterised in that the reversal of the direction of rotation of the roller (7) is effected after one to five revolutions.

3. Device according to claim 1, characterised in that the arm (4), carrying the shaft (5), of the upright (2) is movable perpendicularly by means of the lifting device (8).

4. Device according to claim 1, characterised in that the lifting device consists of a guide at the free end of the arm (4) of the upright (2) in which the perpendicular shaft (5) is guided displaceably.

5. Device according to claim 4, characterised in that the shaft (5) is movable perpendicularly by means of a rack (10) or of a rack portion with an associated pinion (11) or by means of a chain drive.

6. Device according to claim 3, characterised in that one part (2a) of the upright (2) is guided telescopically in a further part (2b) of the upright.

7. Device according to one of the preceding claims, characterised in that the drive of the roller (7) is arranged inside the latter, in which respect the end of the support (6) carrying the roller (7) is mounted rotatably relative to the end (14) of the shaft (5), so that the roller (7) can revolve.

8. Device according to one of claims 1 to 6, characterised in that the shaft (5) is passed through an outer stationary tube (15) and is driven with a driving motor (16) which is arranged above the arm (4) of the upright (2) or in the region of the upper end thereof, in which respect the support (6) carrying the roller (7) is connected securely to the lower end of the shaft (5).

9. Device according to one of claims 1 to 6, characterised in that a spur or bevel gear (17), designed as an angular gear, in the region of the roller axis is driven by means of the shaft (5) and by way of this the roller (7) is driven, the shaft (5) being driven by means of a driving motor (16) arranged in the region of the arm (4) of the upright (2).

10. Device according to claim 9, characterised in that the shaft (5) is passed through an outer stationary tube (15) which carries at its lower end the bearing housing (18) for the spur or bevel gear (17).

11. Device according to claim 8 or 10, characterised in that the outer stationary tube (15) carries out the lifting movement relative to the arm (4) of the upright (2).

12. Device according to one of the preceding claims, characterised in that several rollers, preferably two mutually opposite rollers (7, 7a), are provided.

13. Device according to claim 12, characterised in that the two rollers are driven jointly by a bevel or planetary gear (17).

14. Device according to one of the preceding claims, characterised in that the rollers (7, 7a) are cylindrical.

15. Device according to one of claims 9 to 14, characterised in that the perpendicular shaft (5) is connected at its upper end by a spur gear (47) or the like to a geared motor (21) which for its part acts, along with the interpolation of a clutch (202), on a belt drive which actuates a spindle (24) for the height adjustment of the arm (4) including the gear parts arranged thereon and the roller (7).

16. Device according to claim 15, characterised in that the belt drive (23) is a toothed-belt drive.

17. Device according to claim 15 or 16, characterised in that the engageable clutch is arranged in the belt pulley (22) associated with the gear motor (21).

18. Device according to one of claims 15 to 17, characterised in that the spindle (24) is mounted in a spindle tube (27) which is preferably rectangular in cross-section and at the upper end of which at least one spindle nut (28) is stationarily arranged.

19. Device according to claim 18, characterised in that the spindle tube (24) is guided displaceably in a guide block (29) which is displaceable on the perpendicular upright (2), in which respect the lower end (27a) of the spindle tube (27) can be supported on a base plate (3) or the like of the upright (2).

20. Device according to claim 19, characterised in that the guide block (29) is provided with guide rollers (49, 50) which run in guide grooves (51, 52) of the upright (2).

21. Device according to claim 20, characterised in that arranged in a cross-sectional plane are three guide rollers (49, 50), two (50) of which engage laterally into corresponding grooves (52) of the upright (2), whilst the third guide roller (49) points rearwardly and engages into a groove (51), provided there, of the upright (2).

22. Device according to claim 21, characterised in that two or more sets of these guide rollers (49, 50) are provided over the height of the guide block (29).

23. Device according to claim 22, characterised in that the upper portion of the guide block (29) at least two sets of guide rollers (49, 50) are arranged closer together than in the lower portion.

24. Device according to one of claims 19 to 23, characterised in that arranged between the guide carriage (29) and the upright (2, 3) is at least one spring (31, 33) which, in the lower region of the container (1), reduces the pressure which the roller (7) exerts on the material that is to be compressed.

25. Device according to claim 24, characterised in that the spring (31) is a compression spring which is arranged between a protruding part (30) of the guide block (29) and the upright (2) or the base plate (3) thereof.

26. Device according to claim 24, characterised in that the spring (33) is a tension spring the upper end (33b) of which acts on the upright (2) and the lower end of which acts on the guide carriage (29).

27. Device according to one of the preceding claims, characterised in that the roller (7) is provided on its circumference with teeth (34) engaging into the garbage that is to be compressed and having a triangular cross-section, in which respect the teeth extend along a generatrix of the roller (7).

28. Device according to claim 27, characterised in that the teeth (34) have the shape of a tent-roof which has an outwardly pointing tip (34a) which protrudes towards the free end surface (35) of the roller (7).

29. Device according to one of the preceding claims, characterised in that the end face (35) of the roller has a crowned shape, in which respect the end face has its highest point in the region of the axis (36) of the roller (7).

30. Device according to one of the preceding claims, characterised in that arranged in the region underneath the perpendicular shaft (5) or respectively underneath the angular gear (46) is a supporting foot (48) which rests on the garbage and the lower surface of which lies approximately in the same plane as the corresponding lowermost generatrix of the roller (7).

31. Device according to one of the preceding claims, characterised in that the base plate (3) of the upright (2) is fork-shaped in design, in which respect a pallet (40) or the like which carries the garbage that is to be compressed is insertable between the two forks (39).

32. Device according to claim 31, characterised in that the free ends of the forks (39) are provided with insertion pockets (41) for the reception of the forks of a fork-lift truck or of industrial truck.

33. Device according to one of the preceding claims, characterised in that the container (1) which receives the garbage has a bottomless container lower part (37) which is provided with trapdoors (38) that can be opened outwardly.

34. Device according to claim 33, characterised in that the lower edges (37a) of the container walls of the container lower part (37) and/or at the container lower edges (38a) of the trapdoors (38) are flanges (43) which extend at a right angle to the planes thereof or which point obliquely downwards and which support the garbage that is to be compressed, in the region of the lower edges of the container walls.

35. Device according to claim 33 or 34, characterised in that a container upper part (44), which is likewise provided with trapdoors that can be opened outwards, is superimposable on the container lower part (37).

36. Device according to claim 35, characterised in that the container upper part (44) is upwardly open.

37. Device according to one of claims 15 to 36, characterised in that, for masking the spindle (24) or the spindle tube (27) relative to the container parts (37, 44), arranged on the guide carriage (29) is a guide rail (54), the side edges (54a) of which engage in grooves (55), formed by sheet-metal anglings, of guides (56) on the container upper part (44).

38. Device according to claim 37, characterised in that the lower region of the guide rail (54) is a bearing surface on which anglings of the container upper part (44) are supported upon an upwards movement of the guide carriage (29).

39. Device according to one of the preceding claims, characterised in that the reversible movement of the roller (7) is controlled by way of a timeswitch.

## Revendications

1. Dispositif pour compacter des immondices composés de matériel d'emballage et de déchets faciles à presser, tels que des cartonnages, des emballages légers en matière plastique et en bois, des papiers, des déchets de découpe ainsi que des copeaux de bois, de matière plastique et de métal, constitué par un réceptacle (1) à immondices ouvert vers le haut, un cylindre de compactage (7) pénétrant dans le réceptacle et décrivant un mouvement circulaire sur les immondices, supporté par une colonne (2) surplombant le réceptacle, qui peut effectuer pendant le processus de compactage et alors que le réceptacle se remplit de façon croissante un mouvement vertical relatif par rapport au réceptacle, caractérisé en ce qu'un arbre (5) s'étendant verticalement est monté sur un bras (4) de la colonne (2) qui surplombe le réceptacle à immondices (1), à l'extrémité inférieure duquel est prévu au moins un support (6) s'étendant horizontalement et pouvant tourner autour de l'arbre (5), sur lequel le cylindre (7) est monté de façon rotative, le cylindre (7) s'appliquant par son propre poids sur les immondices (12) et le bras (4) étant en liaison avec un dispositif élévateur (8) situé du côté de la colonne qui admet un déplacement vertical du cylindre (7) du fait de son propre poids, et le cylindre (7) étant soumis à un mouvement alternatif continu de marche vers l'avant et vers l'arrière.

2. Dispositif selon la revendication 1, caractérisé en ce que l'inversion du mouvement de rotation du cylindre (7) a lieu après une à cinq rotations.

3. Dispositif selon la revendication 1, caractérisé en ce que le bras (4) de la colonne (2) qui supporte l'arbre (5) peut être déplacé verticalement par le dispositif élévateur (8).

4. Dispositif selon la revendication 1, caractérisé en ce que le dispositif élévateur est constitué par un dispositif de guidage à l'extrémité libre du bras (4) de la colonne (2), dans lequel l'arbre vertical (5) est guidé de façon mobile.

5. Dispositif selon la revendication 4, caractérisé en ce que l'arbre (5) peut être déplacé verticalement au moyen d'une crémaillère (10) ou d'une section de crémaillère avec un pignon (11) associé, ou au moyen d'un entraînement à chaîne.

6. Dispositif selon la revendication 3, caractérisé en ce qu'une partie (2a) de la colonne (2) est guidée de façon télescopique dans une autre partie (2b) de la colonne.

7. Dispositif selon l'une des revendications précédentes, caractérisé en ce que l'entraînement du cylindre (7) est monté à l'intérieur du cylindre lui-même, l'extrémité du support (6) supportant le cylindre (7) étant montée de façon rotative par rapport à l'extrémité (14) de l'arbre (5) de manière que le cylindre (7) puisse tourner.

8. Dispositif selon l'une des revendications 1 à 6, caractérisé en ce que l'arbre (5) est disposé à l'intérieur d'un tube extérieur et fixe (15) et est entraîné par un moteur (16) monté au-dessus du bras (4) de la colonne (2) ou dans la région de son extrémité supérieure, la monture (6) qui supporte le cylindre (7) étant rendue solidaire de l'extrémité inférieure de l'arbre (5).

9. Dispositif selon l'une des revendications 1 à 6, caractérisé en ce qu'un mécanisme à roues droites ou coniques (17) constitué sous forme d'un mécanisme de renvoi est entraîné par l'arbre (5) dans la région de l'axe du cylindre et en ce que le cylindre (7) est eintraîné au moyen de ce mécanisme, l'arbre (5) étant entraîné par un moteur (16) monté dans la région du bras (4) de la colonne (2).

10. Dispositif selon la revendication 9, caractérisé en ce que l'arbre (5) traverse un tube extérieur fixe (15) supportant à son extrémité inférieure le logement (18) d'entraînement à roues droites ou coniques (17).

11. Dispositif selon la revendication 8 ou 10, caractérisé en ce que le tube extérieur fixe (15) effectue le mouvement de sa course verticale par rapport au bras (4) de la colonne (2).

12. Dispositif selon l'une des revendications précédentes, caractérisé en ce que l'on prévoit plusieurs cylindres, de préférence deux cylindres disposés à l'opposé l'un de l'autre (7, 7a).

13. Dispositif selon la revendication 12, caractérisé en ce que les deux cylindres sont entraînés en commun par un mécanisme à roues coniques ou par un mécanisme planétaire (17).

14. Dispositif selon l'une des revendications précédentes, caractérisé en ce que les cylindres (7, 7a) sont de forme cylindrique.

15. Dispositif selon l'une des revendications 9 à 14, caractérisé en ce que l'arbre vertical (5) est relié à son extrémité supérieure par une transmission à pignons droits (47) ou analogue à un moteur (21) qui entraîne de son côté, par interposition d'un accouplement (22), une courroie qui entraîne une broche (24) destinée au positionnement en hauteur du bras (4), y compris les éléments d'entraînement montés sur lui et du cylindre (7).

16. Dispositif selon la revendication 15, caractérisé en ce que le dispositif d'entraînement à courroie (23) est un entraînement à courroie dentée.

17. Dispositif selon la revendication 15 ou 16, caractérisé en ce que l'accouplement embrayable est disposé dans la poulie à courroie (22) associée au moteur d'entraînement (21).

18. Dispositif selon l'une des revendications 15 à 17, caractérisé en ce que la broche (24) est montée dans un tube (27) dont la section est de préférence rectangulaire, à l'extrémité supérieure duquel est disposé au moins un écrou fixe (28) destiné à la broche.

19. Dispositif selon la revendication 18, caractérisé en ce que le tube (27) de la broche est guidé dans un chariot de guidage (29) pouvant se déplacer sur la colonne verticale (2), l'extrémité inférieure (27a) du tube (27) destiné à la broche pouvant s'appuyer sur une plaque de fond (3) ou analogue de la colonne (2).

20. Dispositif selon la revendication 19, caractérisé en ce que le chariot de guidage (29) est muni de galets (49, 50) circulant dans des rainures de guidage (51, 52) de la colonne (2).

21. Dispositif selon la revendication 20, caractérisé en ce qu'on dispose chaque fois trois galets de guidage (49, 50) dans un plan en section transversale, dont deux (50) pénètrent latéralement dans des rainures correspondantes (52) de la colonne (2) alors que le troisième galet de guidage (49) est monté à l'arrière et pénètre dans une rainure (51) de la colonne (2) qui est prévue en cet endroit.

22. Dispositif selon la revendication 21, caractérisé en ce que deux ou plusieurs jeux de ces galets de guidage (49, 50) sont prévus sur la hauteur du chariot de guidage (29).

23. Dispositif selon la revendication 22, caractérisé en ce que dans la section supérieure du chariot de guidage (29) sont disposés au moins deux jeux de galets de guidage (49, 50) plus étroitement l'un contre l'autre que dans la section inférieure.

24. Dispositif selon l'une des revendications 19 à 23, caractérisé en ce qu'entre le chariot de guidage (29) et la colonne (2, 3) est disposé au moins un ressort (31, 33) qui réduit, dans le région inférieure du réceptacle (1), la pression que le cylindre (7) exerce sur les matériaux à compacter.

25. Dispositif selon la revendication 24, caractérisé en ce que le ressort (31) est un ressort de compression disposé entre une partie (30) en saillie du chariot de guidage (29) et la colonne (2) ou sa plaque de base (3).

26. Dispositif selon la revendication 24, caractérisé en ce que le ressort (33) est un ressort de traction dont l'extrémité supérieure (33b) est reliée à la colonne (2) et l'extrémité inférieure au chariot de guidage (29).

27. Dispositif selon l'une des revendications précédentes, caractérisé en ce que le cylindre (7) est muni sur sa périphérie de dents (34) de section triangulaire pénétrant dans les immondices à compacter, les dents étant disposées le long d'une ligne d'enveloppe du cylindre (7).

28. Dispositif selon la revendication 27, caractérisé en ce que les dents (34) ont la forme d'un toit en pavillon comprenant une pointe (34a) tournée vers l'extérieur et faisant saillie en direction de la surface frontale libre (35) du cylindre (7).

29. Dispositif selon l'une des revendications précédentes, caractérisé en ce que le côté frontal du cylindre a une forme bombée, la surface frontale du cylindre présentant son point le plus avancé dans la région de l'axe (36) du cylindre (7).

30. Dispositif selon l'une des revendications précédentes, caractérisé en ce qu'on dispose dans la région située au-dessous de l'arbre vertical (5) ou au-dessous du mécanisme de renvoi d'angle (46) un pied d'appui (48) reposant sur les immondices et dont la surface inférieure est disposée approximativement dans un plan commun à la ligne d'enveloppe inférieure du cylindre (7).

31. Dispositif selon l'une des revendications précédentes, caractérisé en ce que la plaque de base (3) de la colonne (2) est en forme de fourche, entre les deux branches (39) de laquelle peut être enfoncée une palette (40) ou analogue supportant les détritus à compacter.

32. Dispositif selon la revendication 32, caractérisé en ce que les extrémités libres des branches (39) de la fourche sont munies de poches d'insertion (41) destinées à recevoir les branches de la fourche d'un élévateur.

33. Dispositif selon l'une des revendications précédentes, caractérisé en ce que le réceptacle (1) recevant les immondices comprend une partie inférieure (37) sans fond, qui est munie de portes rabattantes (38) s'ouvrant vers l'extérieur.

34. Dispositif selon la revendication 33, caractérisé en ce qu'on prévoit sur les bords inférieurs (37a) des parois de la partie inférieure (37) du réceptacle et/ou sur les bords inférieurs (38a) des portes rabattantes (38) des flasques (43) disposés à angle droit par rapport à leurs plans ou orientés en oblique vers le bas, qui retiennent les immondices à compacter dans la région des bords inférieurs des parois du réceptacle.

35. Dispositif selon la revendication 33 ou 34, caractérisé en ce qu'on dispose sur la partie inférieure (37) du réceptacle une partie supérieure (44), également muni de portes rabattantes (45) souvrant vers l'extérieur.

36. Dispositif selon la revendication 35, caractérisé en ce que la partie supérieure (44) du réceptacle est ouverte vers le haut.

37. Dispositif selon l'une des revendications 15 à 36, caractérisé en ce que pour recouvrir la broche (24) par rapport aux parties (37, 44) du réceptacle, on dispose sur le chariot de guidage (29) un rail de guidage (54) dont les bords latéraux (54a) pénètrent dans des rainures (55), constituées par pliage de tôle, de guides (56) à la partie supérieure (44) du réceptacle.

38. Dispositif selon la revendication 37, caractérisé en ce que dans la région inférieure du rail de guidage (54) est prévue une surface d'appui sur laquelle s'appuient des parties coudées de la partie supérieure (34) du réceptacle lorsqu'il y a un mouvement ascendant du chariot de guidage (29).

39. Dispositif selon l'une des revendications précédentes, caractérisé en ce que le mouvement réversible du cylindre (7) est commandé par une minuterie.

FIG.1

FIG.2

# FIG.3

# FIG.4

# FIG.5

# F I G. 6

# FIG.7